# EUROPÄISCHE PATENTSCHRIFT

(11) **EP 2 188 151 B1**
(45) Veröffentlichungstag und Bekanntmachung des Hinweises auf die Patenterteilung: **25.05.2011**
(21) Anmeldenummer: 08803231.3
(22) Anmeldetag: 26.08.2008
(51) Int. Cl.: B60R 11/02

(54) **ANTRIEBSEINRICHTUNG**
DRIVING DEVICE
DISPOSITIF D'ENTRAÎNEMENT

(30) Priorität: 31.08.2007 DE 102007041342
(43) Veröffentlichungstag der Anmeldung: 26.05.2010
(73) Patentinhaber: Continental Automotive GmbH, 30165 Hannover (DE)
(72) Erfinder: NEUMANN, Frank, 63843 Niedernberg (DE); KISSEL, Robert Wolfgang, 63329 Egelsbach (DE)
(86) Internationale Anmeldenummer: PCT/EP2008/061164
(87) Internationale Veröffentlichungsnummer: WO 2009/027410

(56) Entgegenhaltungen:
- EP-A- 1 768 082
- WO-A-00/29251
- WO-A-2006/034921
- US-A1- 2004 075 639
- US-A1- 2004 174 043

## Beschreibung

Die Erfindung bezieht sich auf eine Antriebseinrichtung zum Dreh- oder Schwenkantrieb einer Baueinheit um eine Drehachse, mit einem Elektromotor, der ein auf einer Antriebswelle angeordnetes Antriebsritzel aufweist, durch das über eine Getriebeanordnung eine senkrecht zur Antriebswelle verlaufende Abtriebswelle drehbar antreibbar ist, deren Drehbewegung auf die Drehachse der Baueinheit übertragbar ist.

Baueinheiten, die elektromotorisch schwenkbar angetrieben werden können, sind z. B. als Bordmonitore an der Armaturentafel von Kraftfahrzeugen bekannt.

Dabei ist der Bordmonitor mit seiner Antriebseinrichtung in einer Öffnung der Armaturentafel angeordnet und kann durch die Antriebseinrichtung zwischen einer die Öffnung verschließenden, annähernd waagrechten Inaktivstellung und eine annähernd senkrechte Aktivstellung schwenkbar angetrieben werden.

EP1 768 082 A offenbart eine gattungsgemäße Antriebseinrichtung.

Da die Platzverhältnisse an der Armaturentafel beschränkt sind, muss der benötigte Einbauraum möglichst gering sein.

Aufgabe der Erfindung ist es daher eine Antriebseinrichtung der eingangs genannten Art zu schaffen, die nur einen geringen Einbauraum erfordert.

Diese Aufgabe wird erfindungsgemäß durch die Merkmale des Anspruchs 1 gelöst, wobei die Getriebeanordnung ein von dem Antriebsritzel der Antriebswelle drehbar antreibbares Kronradgetriebe und ein dem Kronradgetriebe nachgeschaltetes Zykloidgetriebe aufweist, durch das die Abtriebswelle drehbar antreibbar ist.

Diese Ausbildung führt zu einem geringen Bauraumerfordernis bei einer hohen möglichen Übersetzung und gleichmäßig hohem Wirkungsgrad.

Ein Axialspiel der Antriebswelle des Elektromotors führt zu keinem negativen Einfluß bei dem Eingriff des Antriebsritzels der Antriebswelle des Elektromotors in das Kronenrad der Kronradstufe.

Durch die Kronradstufe ist ein bauraumsparender Achsversatz vom Antriebsritzel zum Kronrad von vorzugsweise 90° möglich. Grundsätzlich kann der Achsversatz je nach Bauraumlage zwischen 0° und 135° gewählt werden.

Die Kronradstufe besitzt den weiteren Vorteil, dass sie sehr geräuscharm im Betrieb ist.

Zwar besitzt die Kronradstufe einen hohen Wirkungsgrad. Sie erlaubt aber keine besonders hohe Übersetzung. Dies wird aber durch das hoch übersetzende Zykloidgetriebe kompensiert, so dass die Getriebekombination von Kronradgetriebe und Zykloidgetriebe besonders von Vorteil ist.

Zwischen der Abtriebswelle und der Drehachse der Baueinheit ist vorteilhafterweise eine kraftschlüssige Kupplung angeordnet.

Durch diese kraftüberwindbare Kupplung werden Beschädigungen der Baueinheit sowie Verletzungen von Personen vermieden, die z. B. bei einem Verstellvorgang mit einem Körperteil wie einer Hand oder einem Finger zwischen der Baueinheit und einem feststehenden Bauteil eingeklemmt werden können. Die Kupplung bildet also einen Einklemm- und Überlastschutz.

Aber auch die Zerstörung der Antriebseinrichtung bei nicht sachgemäßem Gebrauch wie händischem Ziehen oder Drücken an der Baueinheit wird vermieden.

Eine Möglichkeit einer kraftschlüssigen Kupplung besteht darin, dass die Drehachse der Baueinheit eine Schlüsselflächen aufweisende Mehrkantwelle ist, die in eine zylindrische Bohrung einer von der Abtriebswelle drehbar antreibbaren Buchse hineinragt, wobei der Kantenabstand der Mehrkantwelle dem Durchmesser der zylindrischen Bohrung der Buchse entspricht sowie die Buchse eine oder mehrere Ausnehmungen aufweist, die die zylindrische Bohrung der Buchse schneiden, mit in die Ausnehmungen ragenden, radial nach innen vorgespannten Federn, die sowohl auf einer Schlüsselfläche der Mehrkantwelle als auch an der Wand der Ausnehmung mit Vorspannung in Anlage sind.

Dabei kann die Ausnehmung eine sich rechtwinklig zur Längserstreckung der Mehrkantwelle erstreckende, tangentiale Nut sein, deren Nutboden sich in einer parallelen Ebene zu einer Schlüsselfläche des Mehrkantwelle erstreckt.

Die Feder ist dabei in einfacher Weise eine sich selbst haltende Feder, wenn die Feder eine Klammerfeder ist, die mit einem Federarm in die Ausnehmung ragt.

Eine doppelte Federbeaufschlagung mit einem einzigen Federbauteil wird dadurch erreicht, dass in der Buchse zwei sich diametral gegenüberliegende Ausnehmungen ausgebildet sind, die sich parallel zueinander erstreckende Wände aufweisen, wobei jeweils ein Federarm an einer der Wände und an einer der Schlüsselflächen mit Vorspannung in Anlage ist.

In einer anderen Ausbildung kann die kraftschlüssige Kupplung eine Reibungskupplung sein, wobei die Drehachse der Baueinheit oder ein damit drehfest verbundenes Bauteil eine Reibfläche aufweist, die mit federnder Vorspannung an einer Gegenreibfläche der Abtriebswelle oder eines von der Abtriebswelle drehbar antreibbaren Bauteils in Anlage ist.

In einer weiteren bauraumsparenden Ausbildung kann die kraftschlüssige Kupplung eine Magnetkraftkupplung sein.

Dazu kann die Magnetkraftkupplung eine Klauenkupplung sein, deren an der Drehachse der Baueinheit bewegbar geführt angeordnete Klauenkörper durch eine Dauermagnetkraft in entsprechende Ausnehmungen der Abtriebswelle oder eines von der Abtriebswelle drehbar antreibbaren Körpers beaufschlagt sind.

Durch das auf der Abtriebswelle der Getriebeanordnung angeordnete Abtriebsritzel kann ein um die Drehachse der Baueinheit drehbares und mit der Baueinheit drehfest verbindbares Zahnrad oder Zahnsegment drehbar antreibbar sein.

Ist dabei die kraftschlüssige Kupplung in der Drehverbindung zwischen dem Zahnrad oder dem Zahnsegment und der Drehachse der Baueinheit angeordnet, so erfolgt eine Überlasttrennung nahe der Baueinheit, auf die eine Überlast einwirkt.

Vorzugsweise ist die Baueinheit eine Anzeige, insbesondere ein elektrooptisches Display eines Kraftfahrzeuges, wobei das Display an der Armaturentafel des Kraftfahrzeugs angeordnet und zwischen einer eingeklappten Inaktivstellung und einer aufgeklappten Aktivstellung schwenkbar antreibbar ist.

Ausführungsbeispiele der Erfindung sind in der Zeichnung dargestellt und werden im folgenden beschrieben. Es zeigen
- Figur 1: eine Perspektivansicht eines elektrooptischen Displays mit einer Antriebseinrichtung,
- Figur 2: eine erste Perspektivansicht der Antriebsein- richtung nach Figur 1,
- Figur 3: eine zweite Perspektivansicht der Antriebsein- richtung nach Figur 1,
- Figur 4: eine dritte Perspektivansicht der Antriebsein- richtung nach Figur 1,
- Figur 5: eine erste Perspektivansicht einer Kupplung der Antriebseinrichtung nach Figur 1,
- Figur 6: eine zweite Perspektivansicht einer Kupplung der Antriebseinrichtung nach Figur 1,

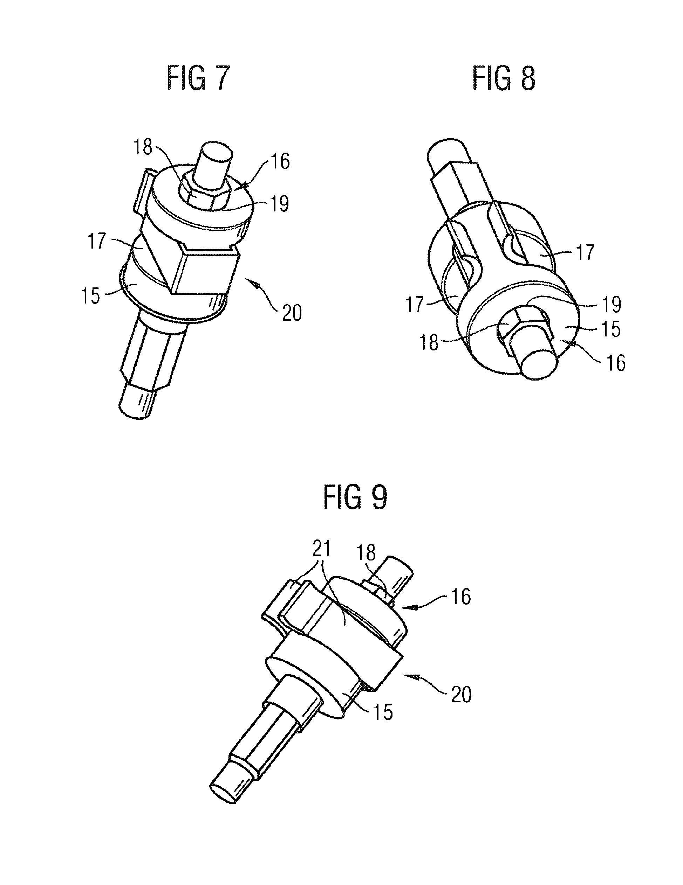

- Figur 7: eine dritte Perspektivansicht einer Kupplung der Antriebseinrichtung nach Figur 1,
- Figur 8: eine vierte Perspektivansicht einer Kupplung der Antriebseinrichtung nach Figur 1,
- Figur 9: eine fünfte Perspektivansicht einer Kupplung der Antriebseinrichtung nach Figur 1,
- Figur 10: eine Perspektivansicht eines zweiten Ausführungs- beispiels einer Kupplung,
- Figur 11: einen Querschnitt der Kupplung nach Figur 10 und
- Figur 12: eine Perspektivansicht eines dritten Ausführungs- beispiels einer Kupplung.

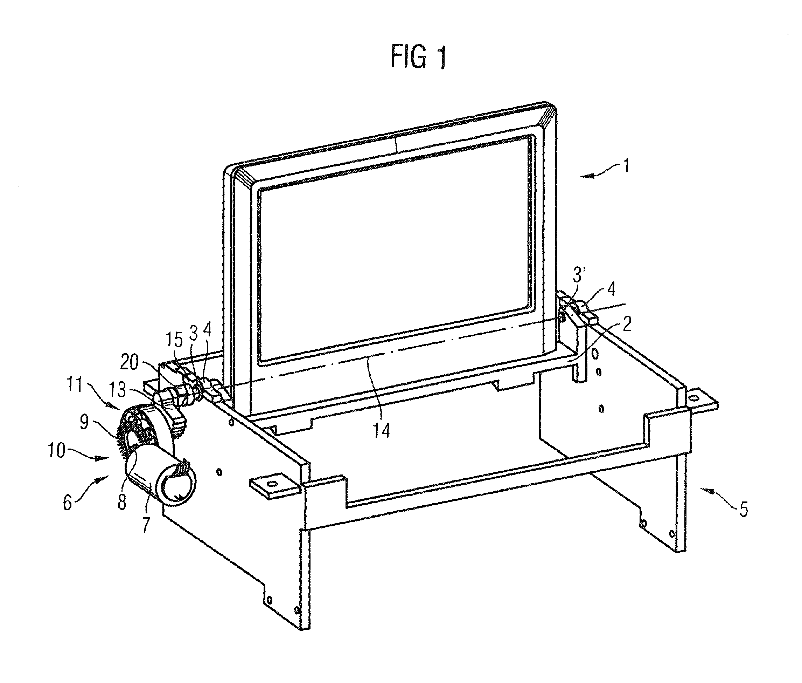

Das in Figur 1 dargstellte Display 1 ist an seinem unteren Rand auf einem Träger 2 angeordnet, der zu beiden Seiten des Displays 1 horizontal hervorstehende Lagerzapfen 3 und 3' aufweist.

Mit den Lagerzapfen 3 und 3' ist das Display 1 an Lagern 4 eines rahmenartigen Einbaugestells 5 schwenkbar gelagert.

Das Einbaugestell 5 ist in eine entsprechende Öffnung einer nicht dargestellten Armaturentafel eines Kraftfahrzeugs einsetzbar.

Der Lagerzapfen 3 und mit ihm der Träger 2 und das Display 1 sind von einer Antriebseinrichtung 6 schwenkbar antreibbar. Die Antriebseinrichtung 6 besitzt einen reversierbar antreibbaren Elektromotor 7, auf dessen sich in bauraumsparender Weise rechtwinklig zur Längserstreckung der Lagerzapfen 3 und 3' erstreckenden Antriebswelle ein Antriebsritzel 8 angeordnet ist, das in die Zähne eines Kronenrades 9 eines Kronradgetriebes 10 eingreift.

Das Kronenrad 9 ist um eine zur Antriebswelle rechtwinklige Achse drehbar gelagert.

Durch den Abtrieb des Kronradgetriebes 10 ist ein dem Kronradgetriebe 10 nachgeschaltetes Zykloidgetriebe 11 drehbar antreibbar, auf dessen Abtriebwelle ein Abtriebsritzel 12 angeordnet ist, das in die Zähne eines Zahnsegments 13 eingreift, welches um die durch die Lagerzapfen 3 und 3' gebildete Drehachse 14 des Displays 1 drehbar gelagert ist.

Koaxial zur Drehachse 14 ist an dem Zahnsegment 13 eine zylindrische Buchse 14 fest angeordnet, in deren zylindrische Bohrung 19 das als Mehrkantwelle 16 ausgebildete eine Ende des Lagerzapfens 3 hineinragt.

Der Kantenabstand der Mehrkantwelle 16 entspricht dabei dem Durchmesser der Bohrung 19 der Buchse 15.

An der Buchse 15 sind rechtwinklig zu deren Längserstreckung diametral einander gegenüberliegend tangentiale Nuten 17 ausgebildet, die eine solche Tiefe besitzen, dass ihre Nutböden sich in derselben Ebene wie eine der Schlüsselflächen 18 erstreckt.

Eine Klammerfeder 20 mit zwei zueinander etwa parallelen Federarmen 21 ist derart auf die Buchse 15 aufgesteckt, dass sich jeweils ein Federarm 21 in eine der Nuten 17 erstreckt und mit Vorspannung sowohl an den Nutboden dieser Nut 17 als auch an einer Schlüsselfläche 18 der Mehrkantwelle 16 in Anlage ist.

Dadurch sind Buchse 15 und Mehrkantwelle 16 kraftschlüssig eine Drehbewegung übertragend miteinander gekuppelt, so dass die von dem Elektromotor 7 auf das Antriebsritzel 8 ausgeübte Drehbewegung über die durch das Kronradgetriebe 10 und das Zykloidgetriebe 11 gebildete Getriebeeinheit und das Zahnsegment 13 auf den Lagerzapfen 3 und mit ihm auf das Display 1 übertragen wird.

Wird durch Festhalten des Displays 1 dessen Schwenkbewegung verhindert, entsteht eine solche Erhöhung des zu überwindenden Drehmoments, dass sich die Federarme 21 der Klammerfeder 20 nach außen aufweiten, was zu einem Öffnen der Drehverbindung führt.

Eine Verhinderung der Drehbewegung ist dadurch möglich, dass ein Gegenstand oder ein Körperteil wie ein Finger eines Menschen in den Schwenkbereich des Displays 1 gelangt und zwischen Display und Einbaugestell 5 oder Armaturentafel eingeklemmt wird. Durch das Entkuppeln des Lagerzapfens 3 von der Buchse 15 kann es nicht zu wesentlichen Beschädigungen des Gegenstandes oder des Körperteils kommen.

Aber auch in seiner dargestellten Aktivstellung kann es zu einer Kraftbeaufschlagung des nicht angetriebenen Displays 1 in Schwenkrichtung kommen, die zu einem Lösen der kraftschlüssigen Kupplung durch die Klammerfeder 20 führt und so Beschädigungen an der Antriebseinrichtung vermeidet.

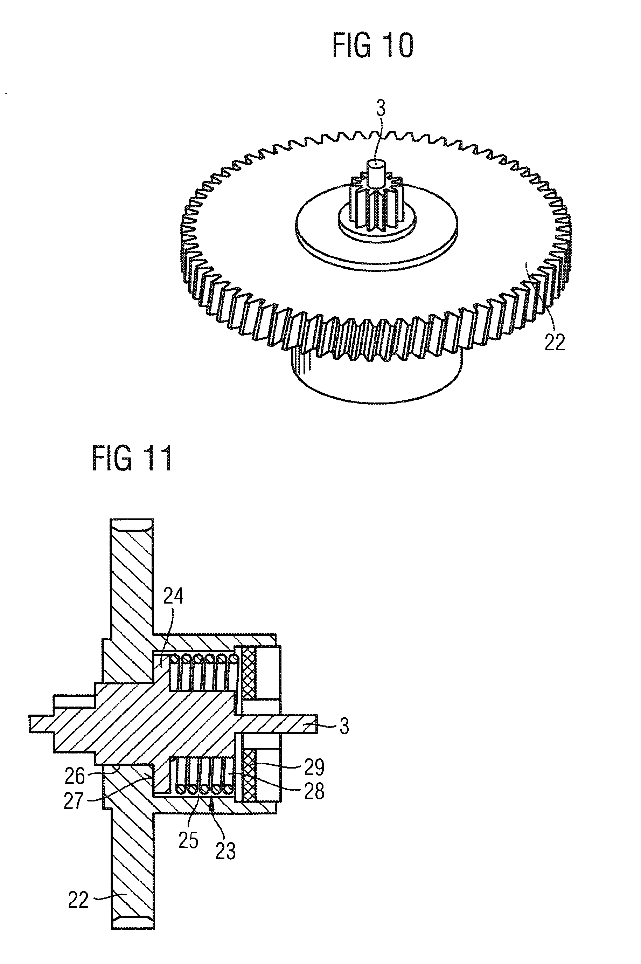

Bei dem Ausführungsbeispiel der Figuren 10 und 11 ist anstatt eines Zahnsegments 13 ein Zahnrad 22 vorhanden, das eine Stufenbohrung 23 aufweist.

In die Stufenbohrung 23 ragt der Lagerzapfen 3 hinein, der mit einer radialen Erweiterung 24 versehen ist, deren dem radialen Übergang 26 von der großen Stufe 25 zur kleinen Stufe 26 der Stufenbohrung 23 zugewandte Fläche eine Reibfläche 27 bildet.

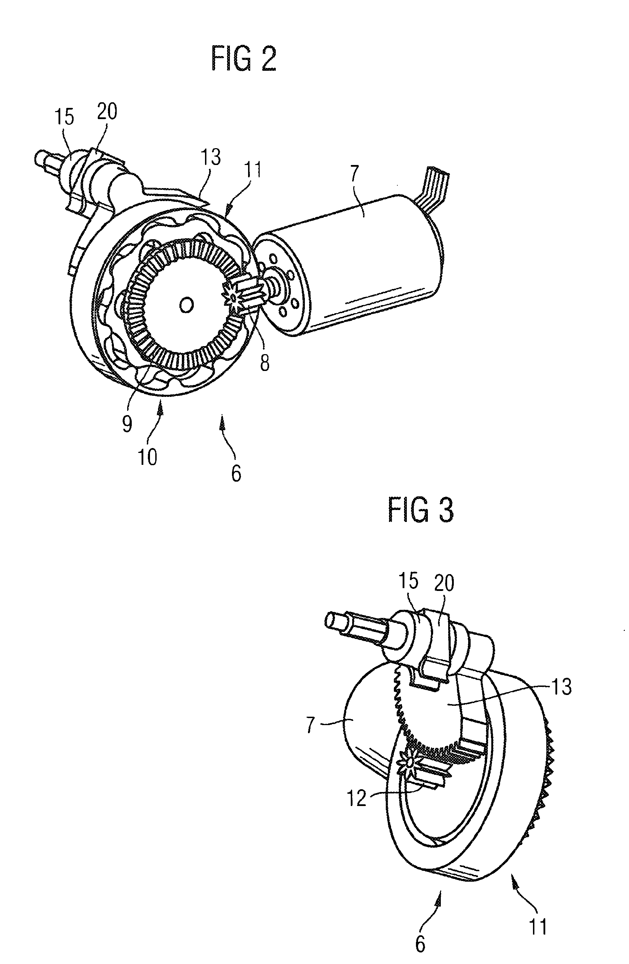

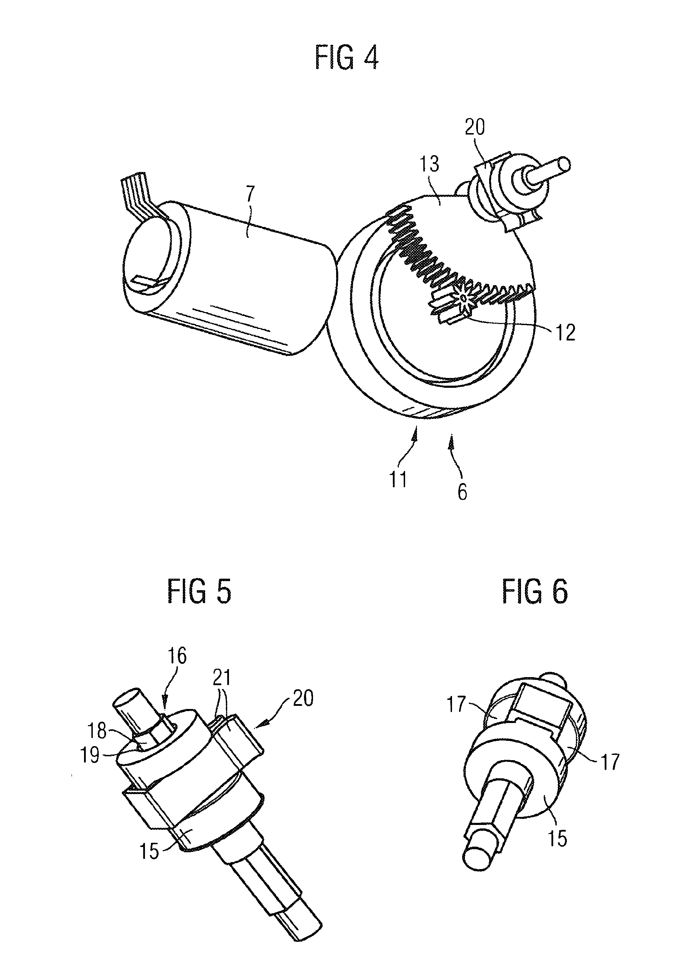

Durch eine die der Reibfläche 27 entgegengesetzte Fläche der radialen Erweiterung 24 mit Vorspannung beaufschlagende Schraubendruckfeder 28 wird die Reibfläche 27 gegen eine durch den radialen Übergang 26 gebildete Gegenreibfläche beaufschlagt, so dass eine kraftschlüssige Reibungskupplung gebildet wird, die unter den gleichen Bedingungen, wie bei dem Ausführungsbeispiel der Figuren 2 bis 4, lösbar ist.

Die Schraubendruckfeder 28 ist dabei mit ihrem der radialen Erweiterung 24 entgegengesetzten Ende an einem an der Innenwand der großen Stufe 25 der Stufenbohrung 23 fest angeordneten Abstützring 29 abgestützt.

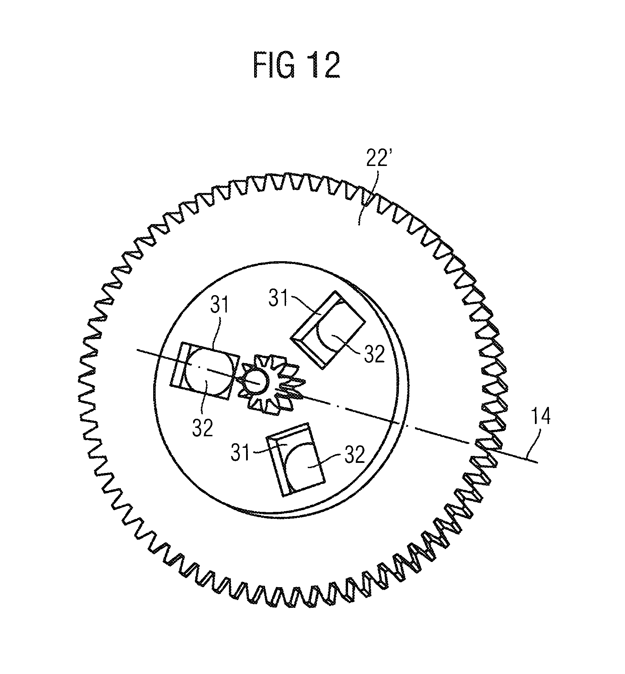

Bei dem Ausführungsbeispiel der Figur 12 ist ebenfalls anstatt eines Zahnsegments ein Zahnrad 22' vorhanden.

Koaxial zu dem Zahnrad 22' befindet sich ein scheibenartiges Bauteil 30, das drehfest mit dem Lagerzapfen 3 verbunden ist.

In dem scheibenartigen Bauteil 30 sind gleichmäßig am Umfang verteilt durchgehende Kammern 31 ausgebildet, in denen kugelartige Klauenkörper 32 axial bewegbar angeordnet sind.

Auf demselben Teilkreis wie die Kammern 31 sind in dem Zahnrad 22' nicht dargestellte Vertiefungen ausgebildet, in die die metallischen Klauenkörper 32 durch nicht dargestellt, in dem Zahnrad 22' angeordnete Dauermagnete mit einem Teil ihres Umfangs hineingezogen werden, so dass eine durch Magnetkraft bewirkte Klauenkupplung zwischen dem Zahnrad 22' und dem mit dem Lagerzapfen 3 fest verbundenen scheibenartigen Bauteil 30 gebildet ist, die unter den gleichen Bedingungen, wie beim Ausführungsbeispiel der Figuren 2 - 4, lösbar ist.

## Patentansprüche

1. Antriebseinrichtung zum Dreh- oder Schwenkantrieb einer Baueinheit um eine Drehachse, mit einem Elektromotor, der ein auf einer Antriebswelle angeordnetes Antriebsritzel aufweist, durch das über eine Getriebeanordnung eine senkrecht zur Antriebswelle verlaufende Abtriebswelle drehbar antreibbar ist, deren Drehbewegung auf die Drehachse der Baueinheit übertragbar ist, **dadurch gekennzeichnet, dass** die Getriebeanordnung ein von dem Antriebsritzel (8) der Antriebswelle drehbar antreibbares Kronradgetriebe (10) und ein dem Kronradgetriebe (10) nachgeschaltetes Zykloidgetriebe (11) aufweist, durch das die Abtriebswelle drehbar antreibbar ist.

2. Antriebseinrichtung nach Anspruch 1, **dadurch gekennzeichnet, dass** zwischen der Abtriebswelle und der Drehachse (14) der Baueinheit eine kraftschlüssige Kupplung angeordnet ist.

3. Antriebseinrichtung nach Anspruch 2, **dadurch gekennzeichnet, dass** die Drehachse (14) der Baueinheit eine Schlüsselflächen (18) aufweisende Mehrkantwelle (16) ist, die in eine zylindrische Bohrung (19) einer von der Abtriebswelle drehbar antreibbaren Buchse (15) hineinragt, wobei der Kantenabstand der Mehrkantwelle (16) dem Durchmesser der zylindrischen Bohrung (19) der Buchse (15) entspricht sowie die Buchse (15) eine oder mehrere Ausnehmungen aufweist, die die zylindrische Bohrung (19) der Buchse (15) schneiden, mit in die Ausnehmungen ragenden, radial nach innen vorgespannten Federn, die sowohl auf einer Schlüsselfläche (18) der Mehrkantwelle (16) als auch an einer Wand der Ausnehmung mit Vorspannung in Anlage sind.

4. Antriebseinrichtung nach Anspruch 3, **dadurch gekennzeichnet, dass** die Ausnehmung eine sich rechtwinklig zur Längserstreckung der Mehrkantwelle (16) erstreckende, tangentiale Nut (17) ist, deren Nutboden sich in einer parallelen Ebene zu einer Schlüsselfläche (18) der Mehrkantwelle (16) erstreckt.

5. Antriebseinrichtung nach einem der Ansprüche 3 und 4, **dadurch gekennzeichnet, dass** die Feder eine Klammerfeder (20) ist, die mit einem Federarm (21) in die Ausnehmung ragt.

6. Antriebseinrichtung nach Anspruch 5, **dadurch gekennzeichnet, dass** in der Buchse (15) zwei sich diametral gegenüberliegende Ausnehmungen ausgebildet sind, die sich parallel zueinander erstreckende Wände aufweisen, wobei jeweils ein Federarm (21) an einer der Wände und an einer der Schlüsselflächen (18) mit Vorspannung in Anlage sind.

7. Antriebseinrichtung nach Anspruch 2, **dadurch gekennzeichnet, dass** die kraftschlüssige Kupplung eine Reibungskupplung ist.

8. Antriebseinrichtung nach Anspruch 7, **dadurch gekennzeichnet, dass** die die Drehachse (14) der Baueinheit oder ein damit drehfest verbundenes Bauteil eine Reibfläche (27) aufweist, die mit federnder Vorspannung an einer Gegenreibfläche der Abtriebswelle oder eines von der Abtriebswelle drehbar antreibbaren Bauteils in Anlage ist.

9. Antriebseinrichtung nach Anspruch 2, **dadurch gekennzeichnet, dass** die kraftschlüssige Kupplung eine Magnetkraftkupplung ist.

10. Antriebseinrichtung nach Anspruch 9, **dadurch gekennzeichnet, dass** die Magnetkraftkupplung eine Klauenkupplung ist, deren an der Drehachse (14) der Baueinheit bewegbar geführt angeordnete Klauenkörper (32) durch eine Dauermagnetkraft in entsprechende Ausnehmungen der Abtriebswelle oder eines von der Abtriebswelle drehbar antreibbaren Körpers beaufschlagt sind.

11. Antriebseinrichtung nach einem der vorhergehenden Ansprüche, **dadurch gekennzeichnet, dass** durch das auf der Abtriebswelle der Getriebeanordnung angeordnete Abtriebsritzel (8) ein um die Drehachse (14) der Baueinheit drehbares und mit der Baueinheit drehfest verbindbares Zahnrad (22, 22') oder Zahnsegment (13) drehbar antreibbar ist.

12. Antriebseinrichtung nach Anspruch 11, **dadurch gekennzeichnet, dass** die kraftschlüssige Kupplung in der Drehverbindung zwischen dem Zahnrad (22, 22') oder dem Zahnsegment (13) und der Drehachse (14) der Baueinheit angeordnet ist.

13. Antriebseinrichtung nach einem der vorhergehenden Ansprüche, **dadurch gekennzeichnet, dass** die Baueinheit eine Anzeige, insbesondere ein elektrooptisches Display (1) eines Kraftfahrzeugs ist.

14. Antriebseinrichtung nach Anspruch 13, **dadurch gekennzeichnet, dass** das Display (1) an der Armaturentafel des Kraftfahrzeugs angeordnet und zwischen einer eingeklappten Inaktivstellung und einer aufgeklappten Aktivstellung schwenkbar antreibbar ist.

## Claims

1. Driving device for driving a unit to rotate or pivot about a rotary shaft, having an electric motor which has a drive pinion which is arranged on a drive shaft and by means of which an output shaft, which runs perpendicular to the drive shaft, can be rotatably driven via a gear mechanism arrangement, it being possible for the rotary movement of the output shaft to be transmitted to the rotary shaft of the unit, **characterized in that** the gear mechanism arrangement has a contrate gear mechanism (10) which can be rotatably driven by the drive pinion (8) of the drive shaft, and a cycloid gear mechanism (11) which is connected downstream of the contrate gear mechanism (10) and by means of which the output shaft can be rotatably driven.

2. Driving device according to Claim 1, **characterized in that** a non-positive clutch is arranged between the output shaft and the rotary shaft (14) of the unit.

3. Driving device according to Claim 2, **characterized in that** the rotary shaft (14) of the unit is a polygonal shaft (16) which has wrench flats (18) and which projects into a cylindrical hole (19) in a bushing (15) which can be rotatably driven by the output shaft, with the edge spacing of the polygonal shaft (16) corresponding to the diameter of the cylindrical hole (19) in the bushing (15), and the bushing (15) having one or more recesses which intersect the cylindrical hole (19) in the bushing (15) and have springs which project into the recesses, are prestressed radially inward, and rest both on a wrench flat (18) of the polygonal shaft (16) and also against a wall of the recess with prestress.

4. Driving device according to Claim 3, **characterized in that** the recess is a tangential groove (17) which extends at a right angle to the longitudinal extent of the polygonal shaft (16), the groove base of said groove extending in a plane parallel to a wrench flat (18) of the polygonal shaft (16).

5. Driving device according to either of Claims 3 and 4, **characterized in that** the spring is a clamp spring (20) which projects into the recess by way of a spring arm (21).

6. Driving device according to Claim 5, **characterized in that** two diametrically opposite recesses are formed in the bushing (15), said recesses having walls which extend parallel to one another, with in each case one spring arm (21) resting against one of the walls and against one of the wrench flats (18) with prestress.

7. Driving device according to Claim 2, **characterized in that** the non-positive clutch is a frictional clutch.

8. Driving device according to Claim 7, **characterized in that** the rotary shaft (14) of the unit or a component which is connected to said rotary shaft in a rotationally fixed manner has a frictional surface (27) which rests, with spring prestress, against a mating frictional surface of the output shaft or a component which can be rotatably driven by the output shaft.

9. Driving device according to Claim 2, **characterized in that** the non-positive clutch is a magnetic-force clutch.

10. Driving device according to Claim 9, **characterized in that** the magnetic-force clutch is a dog clutch, the claw bodies (32) of said dog clutch, which claw bodies are arranged such that they are movably guided along the rotary shaft (14) of the unit, being subjected to the action of a permanent-magnet force in corresponding recesses in the output shaft or a body which can be rotatably driven by the output shaft.

11. Driving device according to one of the preceding claims, **characterized in that** a gear wheel (22, 22') or toothed segment (13), which gear wheel or toothed segment can be rotated about the rotary shaft (14) of the unit and can be connected to the unit in a rotationally fixed manner, can be rotatably driven by the output pinion (8) which is arranged on the output shaft of the gear mechanism arrangement.

12. Driving device according to Claim 11, **characterized in that** the non-positive clutch is rotationally connected between the gear wheel (22, 22') or the toothed segment (13) and the rotary shaft (14) of the unit.

13. Driving device according to one of the preceding claims, **characterized in that** the unit is an indicator device, in particular an electro-optical display (1) of a motor vehicle.

14. Driving device according to Claim 13, **characterized in that** the display (1) is arranged on the dashboard of the motor vehicle and can be pivotably driven between a folded-in inactive position and a swung-open active position.

## Revendications

1. Dispositif d'entraînement pour l'entraînement en rotation ou en pivotement d'une unité de construction autour d'un axe de rotation, comprenant un moteur électrique qui a un pignon d'entraînement qui est monté sur un arbre menant et par lequel, par l'intermédiaire d'un train d'engrenage, peut être entraîné en rotation un arbre mené qui s'étend perpendiculairement à l'arbre menant et dont le mouvement de rotation peut être transmis à l'axe de rotation de l'unité de construction, **caractérisé en ce que** le train d'engrenage comporte un engrenage (10) à roue à couronne dentée, pouvant être entraîné en rotation par le pignon (8) d'entraînement de l'arbre moteur, et un engrenage (11) cycloïde monté en aval de l'engrenage (10) à roue à couronne dentée, par lequel l'arbre mené peut être entraîné en rotation.

2. Dispositif d'entraînement suivant la revendication 1, **caractérisé en ce qu'**un accouplement à coopération de force est disposé entre l'arbre mené et l'axe (14) de rotation de l'unité de construction.

3. Dispositif d'entraînement suivant la revendication 2, **caractérisé en ce que** l'axe (14) de rotation de l'unité de construction est un arbre polygonal qui a une surface (18) formant clé et qui pénètre dans un trou (19) cylindrique d'un manchon (15) pouvant être entraîné en rotation par l'arbre mené, la distance entre arêtes de l'arbre (16) polygonal correspondant au diamètre du trou (19) cylindrique du manchon (15) et le manchon (15) ayant un ou plusieurs évidements qui coupent le trou (19) cylindrique du manchon (15), avec des ressorts pénétrant dans les évidements, précontraints radialement vers l'intérieur et en contact, avec précontrainte, à la fois avec une surface (18) formant clé de l'arbre (16) polygonal et avec une paroi de l'évidement.

4. Dispositif d'entraînement suivant la revendication 3, **caractérisé en ce que** l'évidement est une rainure (17) tangentielle qui s'étend à angle droit avec l'étendue longitudinale de l'arbre (16) polygonal et dont le fond s'étend dans un plan parallèle à une surface (18) formant clé de l'arbre (16) polygonal.

5. Dispositif d'entraînement suivant l'une des revendications 3 et 4, **caractérisé en ce que** le ressort est un ressort (20) en étrier qui pénètre dans l'évidement par un bras (21) de ressort.

6. Dispositif d'entraînement suivant la revendication 5, **caractérisé en ce que** dans le manchon (15) sont formés deux évidements opposés diamétralement, qui ont des parois s'étendant parallèlement les unes aux autres, respectivement un bras (21) de ressort étant en contact, avec précontrainte, avec l'une des parois et avec l'une des surfaces (18) formant clé.

7. Dispositif d'entraînement suivant la revendication 2, **caractérisé en ce que** l'accouplement à complémentarité de force est un accouplement à frottement.

8. Dispositif d'entraînement suivant la revendication 7, **caractérisé en ce que** l'axe (14) de rotation de l'unité de construction ou un élément qui en est solidaire en rotation a une surface (27) de frottement, qui est en contact, avec, précontrainte élastique, avec une surface de frottement antagoniste de l'arbre mené ou avec un élément pouvant être entraîné en rotation par l'arbre mené.

9. Dispositif d'entraînement suivant la revendication 2, **caractérisé en ce que** l'accouplement à coopération de force est un accouplement par force magnétique.

10. Dispositif d'entraînement suivant la revendication 9, **caractérisé en ce que** l'accouplement par force magnétique est un crabotage dont les corps (32) de crabotage, guidés de manière mobile sur l'axe (14) de rotation de l'unité de construction, sont soumis à une force d'aimant permanent dans des évidements correspondants de l'arbre mené ou d'un corps pouvant être entraîné en rotation par l'arbre mené.

11. Dispositif d'entraînement suivant l'une des revendications précédentes, **caractérisé en ce que**, par le pignon (8) mené monté sur l'arbre mené du train d'engrenage, une roue (22, 22') dentée ou un segment (13) denté pouvant être entraîné en rotation autour de l'axe (14) de rotation de l'unité de construction et pouvant être solidarisé en rotation de l'unité de construction, peut être entraîné en rotation.

12. Dispositif d'entraînement suivant la revendication 11, **caractérisé en ce que** l'accouplement à coopération de force est disposé dans la liaison en rotation entre la roue (22, 22') dentée ou le segment (13) denté et l'axe (14) de rotation de l'unité de construction.

13. Dispositif d'entraînement suivant l'une des revendications précédentes, **caractérisé en ce que** l'unité de construction est un affichage, notamment un affichage (1) électro-optique d'un véhicule automobile.

14. Dispositif d'entraînement suivant la revendication 13, **caractérisé en ce que** l'affichage (1) est monté sur le tableau de bord du véhicule automobile et peut être entraîné en pivotement entre une position inactive rabattue et une position active déployée.
